# EUROPEAN PATENT SPECIFICATION

(11) **EP 1 827 676 B1**
(45) Date of publication and mention of the grant of the patent: **17.10.2018**
(21) Application number: 05813787.8
(22) Date of filing: 06.12.2005
(51) Int. Cl.: B01J 19/00

(54) **DEVICE FOR FLUID TRANSPORT**
VORRICHTUNG FÜR DEN FLUIDTRANSPORT
DISPOSITIF POUR TRANSPORT DE LIQUIDE

(30) Priority: 06.12.2004 GB 0426766; 07.02.2005 GB 0502443
(43) Date of publication of application: 05.09.2007
(73) Proprietor: Midatech Pharma (Wales) Limited, Cardiff CF24 0AA (GB)
(72) Inventor: Davis, Robert, Huw, Hongoed CF82 7AT (GB)
(74) Representative: Abel & Imray
(86) International application number: PCT/GB2005/004689
(87) International publication number: WO 2006/061605

(56) References cited:
- EP-A- 1 217 099
- EP-A- 1 329 765
- US-A- 3 854 443
- US-A- 4 993 358
- US-B1- 6 655 829

## Description

The present invention is concerned with a micro-reactor comprising a device for producing two or more fluid flows at substantially uniform rates.

It is desirable in many fields, especially in microfluidic circuits to produce simultaneous multiple uniform fluid flows. Apparatus currently used is undesirable because it has a number of limitations including non uniform flow distribution, pressure and flow pulsation.

EP1391237 discloses a microreactor device comprising a plurality of microfluidic circuits.

EP1329765 discloses a microreactor device comprising two inlets through which two reactive fluids are fed. Each of the reactive fluids passes through a spiral-shaped channel before passing to a reaction plate where the fluids are reacted together. The reaction product then leaves the microreactor device through a single outlet.

Therefore, it is an aim to alleviate at least some of the disadvantages identified above.

It is a further aim of the present invention to provide apparatus which is capable of producing simultaneous multiple uniform fluid flows.

The present invention provides a micro-reactor comprising multiple microfluidic circuits,
characterised in that
the microfluidic circuits are arranged to receive multiple fluid flows from a device for producing multiple fluid flows at substantially uniform rates and suitable for distributing fluids to the multiple microfluidic circuits, which device includes:
a manifold having a first inlet port and a second inlet port, each inlet port arranged to provide fluid transfer from the inlet port to a respective annular channel;
a distribution element having a first aperture set and a second aperture set therein, each aperture set including at least one aperture and being arranged to be in fluid communication with one of the channels such that fluid is permitted to flow from the channel through an aperture to a respective fluid outlet for delivery of fluid flow to a microfluidic circuit.

It is envisaged that a fluid according to the present invention may be a liquid, gas, vapour or supercritical fluid.

It is preferred that at least one of, and more preferably each of, the annular channels has a diameter from about 50mm to about 300mm. It is further preferred that the mean width of at least one of, and preferably each of, the annular channels is from about 1mm to about 5mm. It is further preferred that the mean depth of at least one of, and preferably each of, the annular channels is from about 1mm to about 5mm. It is preferred that the diameter of at least one of, and preferably each of, the apertures is from about 0.1mm to about 3mm, more preferably from about 0.5mm to about 1.8mm.

The term "microfluidic" may be defined in relation to one or both of the flow rate through such a circuit and the size of the conduits in the
circuit. In use, the flow through a typical microfluidic circuit is of the order of between 0.1ml/hour to 100ml/hour. Such microfluidic circuits typically comprise conduits having widths and depths of between 0.05 and 2mm.

It is particularly preferred that each aperture set includes two or more apertures. Each aperture is preferably arranged to permit fluid to flow from the annular channel to the fluid outlet. It is particularly preferred that each aperture has a distinct fluid outlet.

The annular channel may be continuous or broken. A broken channel has one or more breaks, each break being located between two adjacent apertures of an aperture set having two or more apertures. Such a break in the channel prevents flow in a channel between the two adjacent apertures. Such a break in the channel is anticipated to be small, for example, having an angular dimension of 60 degrees or less, and preferably 45 degrees or less, more preferably 36 degrees or less. It is preferred that a break is provided between the two apertures that are most remote from the respective inlet port, because it has been found that there is a "dead space" between these two apertures in which there is little flow. This presents difficulties in cleaning the device. A break may be provided by a blocking insert placed in a previously-continuous, complete channel. Alternatively, the break in the channel may be provided by failing to form a part of the channel that, if formed, would make a continuous, complete channel.

According to a particularly preferred embodiment of the present invention, each aperture in each set is spaced apart by an equidistant amount. Each aperture set includes a plurality of apertures, each aperture providing fluid communication between the annular channel and a respective fluid outlet. Therefore, the first aperture set provides fluid transfer of the first fluid from the first annular channel to the first fluid outlets.

It is particularly preferred that the cross sectional area of the annular channel is several times greater than the cross sectional area of the apertures so as to substantially minimise pressure differences between each of the apertures. It is particularly preferred that the ratio of the cross sectional area of the annular channel to the cross sectional area of the apertures is preferably greater than 5:1.

It is also preferred that the cross-sectional area of at least one of the annular channels in the region of the respective inlet port is greater than the cross-sectional area of the said annular channel in a region remote from the inlet port. It is preferred that the cross-sectional area of the annular channel decreases continuously from a region proximate to the respective inlet port to a region remote from the respective inlet port.

The device typically includes an annular channel for each fluid inlet port. In addition, the device may preferably include an aperture set for each annular channel. Therefore, for example, the device will include an annular channel and an aperture set for each fluid inlet port.

Preferably, the device further includes a flow restrictor. The flow restrictor is typically arranged to maintain fluid through the manifold at a predetermined pressure and/or balance the flow as it enters the outlets. The flow restrictor is typically arranged in a distribution passageway in the distribution element such that, in use, fluid flows from an aperture in the channel, through the restriction means, to a respective fluid outlet.

It is envisaged that the flow restrictor may include the internal shape or configuration of the distribution passageway; the internal shape or configuration typically having an internal diameter which is predetermined such that a predetermined flow is obtained. Alternatively, the flow restrictor may include a length of pipe or tubing, for example, positioned in the distribution passageway. The pipe or tubing having an internal diameter which is predetermined such that a predetermined flow is obtained.

Each fluid inlet port is typically arranged to transfer a different fluid; however it is envisaged that the same fluid can be introduced through each fluid inlet, although, this is not preferred.

It is further envisaged that the manifold includes at least one further inlet port; each further inlet port arranged to provide fluid transfer from the inlet port to a respective annular channel.

Each aperture set typically includes several apertures, however, this is dependent upon the number of outlets for each fluid required by the end user.

The manifold can be manufactured from an inert material such as the polymer polyetheretherketone or glass, however, it is particularly preferred that the manifold is machined from stainless steel.

The distribution element can be manufactured from an inert material, such as the polymer polyetheretherketone or glass, however, it is particularly preferred that the distribution element is machined from stainless steel.

Whilst a number of geometric configurations are possible it is particularly preferred that each annular channel is arranged as concentric configurations. It is therefore further preferred that the apertures in each aperture set are also arranged as concentric configurations.

The device is used in an apparatus for distributing fluids to multiple microfluidic circuits. For example, a system comprising of two or more microfluidic circuits arranged on top of each other; such a system is known as a single stack system. However, the distributor may be employed to function with multilayer stack configurations. The device is particularly useful when the microfluidic circuit requires supply of two or more different fluids, each fluid being split to feed two or more outlets.

The multiple microfluidic circuits may be provided by a segmented flow device for producing two or more segmented flows of liquid.

Also described is a micro-reactor which includes:
a device for producing a fluid flow at a substantially uniform rate including a first inlet port and a second inlet port,
each inlet port arranged to provide fluid transfer from the respective inlet port to a respective annular channel;
a distribution element having a first aperture set and a second aperture set therein, each aperture set in fluid communication with the annular channel and comprising a plurality of apertures such that, in use, fluid is permitted to flow through an aperture to a respective fluid outlet; and a segmented flow device for producing two or more segmented flows of liquid.

The microreactor typically further includes a panel arranged over the segmented flow device, the panel being transparent to light in the ultraviolet, visible infrared and far-infrared spectrum. The transparent panel may be fabricated from a plurality of materials such as acrylic, fused silica, quartz, sapphire, Teflon AF and calcium fluoride, however glass is particularly preferred.

The distribution element or segmented flow device may be provided with a flow restrictor. The flow restrictor is typically arranged to maintain fluid at a predetermined pressure and/or balance the flow as it enters the outlets.

The present invention will now be described by way of example only, with reference to the accompanying drawings, wherein
FIGURE 1, represents a cross-sectional view of a device for producing a fluid flow at a substantially uniform rate, in use with a device for producing segmented flow;
FIGURE 2 represents a planar view of the distributor used in the device of Fig. 1;
FIGURE 3a represents a planar, schematic view of an annular channel used in the device of Figure 1; and
FIGURE 3b represents a planar, schematic view of an alternative annular channel that may be used in the device of Fig. 1.

Referring to the figures where like numerals have been used to represent like parts, there is provided a device for producing a fluid flow at a substantially uniform rate generally indicated by the numeral 1.

Three separate fluids are introduced into the manifold 2 through three inlets 3 (only one inlet is shown) and subsequently flow into three separate annular channels 4, 5 and 6. The three fluids may be oleic acid, or similar fatty acid, an aqueous solution of monomer or "macromer" and an aqueous solution of a photo-initiator.

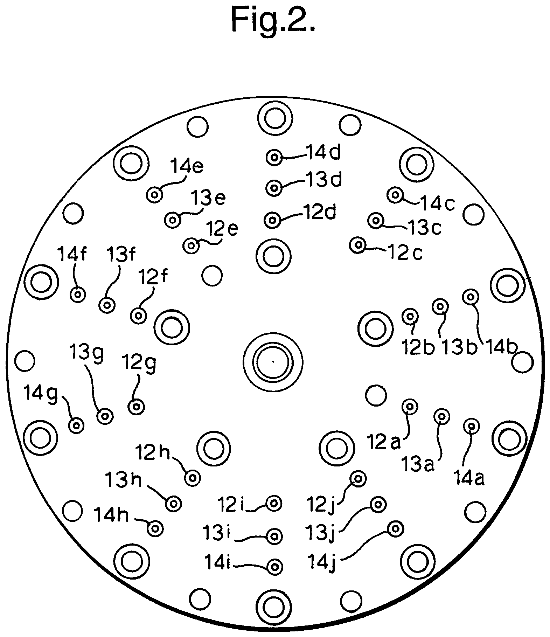

The distributor 7 is fixed to the manifold with screws 26. The three fluids are kept separate by seals between the manifold and distributor by O-rings 8, 9, 10 and 11. The fluids flow from the annular channels 4, 5 and 6 through an array of 30 small apertures 12a-j (denoted hereafter as 12), 13a-j (denoted hereafter as 13) and 14a-j (denoted hereafter as 14) (see figure 2) which are spaced equidistantly around the centreline of each groove and through flow restrictors 25a, 25b, 25c, 25d, 25e, 25f, which restrict and/or balance the flow to the microfluidic circuits (not visible). The ratio of the cross sectional area of annular channels to the cross sectional area of the 10 small holes is greater than 5 so as to substantially minimise pressure differences between each of the small holes.

Clamped to the distributor 7, is the polymer chip 15 containing the microfluidic circuits (not visible). The polymer chip has an array of small holes therein which are in line with the apertures 12, 13, 14 (see figure 2) in the distributor. The fluids are sealed between these two components by O rings 16, 16', 17, 17', 18, 18'. The fluids continue to flow through the chip 15 until they reach the top surface. Here they enter into the microfluidic circuit.

The fluids pass through the microfluidic circuit producing particles which pass from the chip into a central hole 23 and through the distributor 7 and manifold 2 where they are collected.

Clamped to the top of the chip 15 is a hydrophobic polymer gasket 19 and a UV transparent glass window 20. All the above clamping is performed by the cover member 21 which is fixed to the manifold 2 with screws 24. At the top of the cover is a hole 22 designed to accommodate a UV source to illuminate a specific area on the chip.

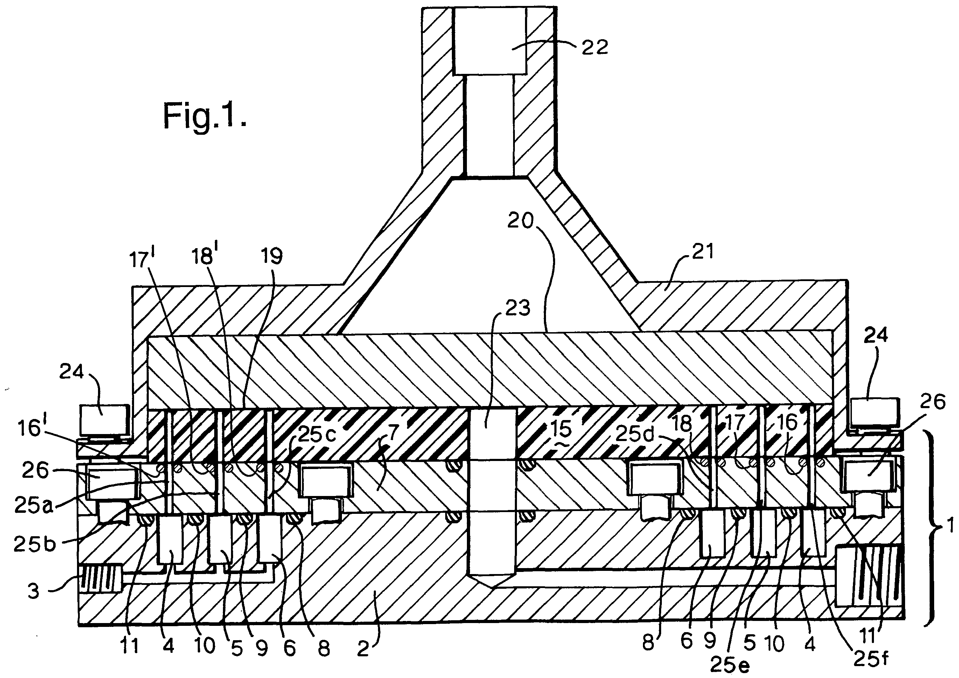

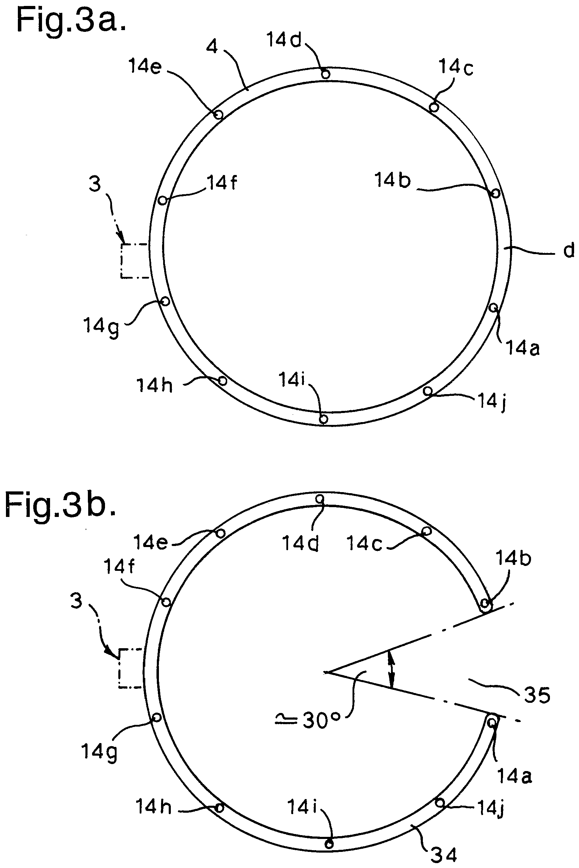

The annular channels 4, 5, 6 of Figure 1 are complete, continuous channels as shown in Figure 3a. An alternative channel is shown in Figure 3b. In each Figure, the positions of the apertures 14a to 14j of distributor 7 are marked onto the annular channels, as is the position of inlet 3.

Referring to Figure 3b, the channel 34 is broken, with a short arcuate break 35 in the channel 34. The break 35 has an angular dimension of about 30 degrees, and extends over a region corresponding to that between apertures 14a and 14b. These two apertures are the most remote from inlet 3. Referring to Figures 3a and 3b, it has been found that in the absence of a break in the annular channel in the region between apertures 14a and 14b, a "dead region" (denoted by reference letter 'd' in Figure 3a) forms in the region of channel between the said two apertures. There is little flow in this "dead region". Whilst the existence of the "dead region" does not affect the operation of the device, it is difficult to clean the device by running cleaning agent through the channel because the "dead region" does not clean properly. The break in the channel between apertures 14a and 14b removes the "dead region" and makes the channel 34 easier to clean.

The break in the channel may be formed by providing a blocking insert in a previously-complete, continuous channel (for example, by putting glue into a previously-complete, continuous channel). Alternatively, and more preferably, the break in the channel may be provided by failing to form a part of the channel that, if formed, would make a continuous, complete "O" channel.

The cross-sectional area of the channel 34 near to the inlet 3 is greater than that remote from the inlet i.e. in the region of the channel that corresponds to apertures 14a, 14b. This assists in obtaining uniform flow rates to all apertures 14a-14j, and this may be achieved by making the channel 34 deeper in the region of the inlet 3 and/or by making the channel 34 wider in the region of the inlet 3. For example, the channel 34 in the region of inlet 3 may be 5mm deep and 5mm wide, whereas in the region of the channel corresponding to apertures 14a, 14b, the channel 34 may be 2mm deep and 2mm wide.

## Claims

1. A micro-reactor comprising multiple microfluidic circuits,
**characterised in that**
the micro-reactor comprises:
(i) a device (1) for producing multiple fluid flows at substantially uniform rates and suitable for distributing fluids to the multiple microfluidic circuits, which device includes:
a manifold (2) having a first inlet port (3) and a second inlet port (3), each inlet port arranged to provide fluid transfer from the inlet port to a
respective annular channel (4, 5, 6, 34);
the microfluidic circuits being arranged to receive multiple fluid flows from the device (1) for producing multiple fluid flows at substantially uniform rates and suitable for distributing fluids to the multiple microfluidic circuits; and
(ii) a distribution element (7) having a first aperture set (12, 13, 14) and a second aperture set (12, 13, 14) therein, each aperture set including at least one aperture (12a-j, 13a-j, 14a-j) and being arranged to be in fluid communication with one of the channels such that fluid is permitted to flow from the channel through an aperture to a respective fluid outlet for delivery of fluid flow to a microfluidic circuit.

2. A micro-reactor according to claim 1 wherein the multiple microfluidic circuits are provided by a segmented flow device for producing two or more segmented flows of liquid.

3. A micro-reactor according to claim 1 or claim 2 wherein each of the annular channels has a diameter of from 50mm to 300mm, a mean width of from 1mm to 5mm and a mean depth of from 1mm to 5mm.

4. A micro-reactor according to any preceding claim wherein the diameter of each aperture is from 0.1mm to 3mm.

5. A micro-reactor according to any preceding claim further including a flow restrictor (25a-f) arranged to maintain fluid through the manifold at a predetermined pressure and/or balance the flow as it enters the outlets.

6. A micro-reactor according to claim 5 wherein the flow restrictor is arranged in a distribution passageway in the distribution element such that, in use, fluid flows from an aperture in the channel, through the restriction means, to a respective fluid outlet.

7. A micro-reactor according to claim 6 wherein the flow restrictor includes the internal shape or configuration of the distribution passageway.

8. A micro-reactor according to claim 6 wherein the flow restrictor includes a length of pipe or tubing positioned in the distribution passageway.

9. A micro-reactor according to any preceding claim wherein each aperture set includes two or more apertures.

10. A micro-reactor according to any preceding claim wherein one or more of the respective channels is continuous.

11. A micro-reactor according to any one of claims 1 to 9 wherein at least one of the aperture sets comprises two or more apertures, and the respective channel (34) is provided with a break (35) between two adjacent apertures.

12. A micro-reactor according to claim 11 wherein the break has an angular dimension of 45 degrees or less.

13. A micro-reactor according to any preceding claim wherein the cross-sectional area of at least one of the channels in the region of the respective inlet port is greater than the cross-sectional area of the said channel in a region remote from the inlet port.

14. A micro-reactor according to any preceding claim wherein each aperture is arranged to permit fluid to flow from the channel to the fluid outlet.

15. A micro-reactor according to any preceding claim, wherein each aperture set includes a plurality of apertures, each aperture providing fluid communication between the channel and a respective fluid outlet.

16. A micro-ractor according to any preceding claim wherein the ratio of the cross sectional area of the channel to the cross sectional area of the apertures is greater than 5:1.

17. A micro-reactor according to any preceding claim including a channel and an aperture set for each fluid inlet port.

18. A micro-reactor according to any preceding claim wherein the manifold includes at least one further inlet port, each further inlet port arranged to provide fluid transfer from the inlet port to a respective channel.

19. A micro-reactor according to any preceding claim wherein each channel is arranged as concentric configurations, and the apertures in each aperture set are also arranged as concentric configurations.

## Patentansprüche

1. Mikroreaktor, umfassend mehrere Mikrofluidkreisläufe,
**dadurch gekennzeichnet, dass**
der Mikroreaktor umfasst:
(i) eine Vorrichtung (1) zum Erzeugen mehrerer Fluidströme mit im Wesentlichen gleichmäßigen Durchflussmengen und geeignet zum Verteilen von Fluiden an die mehreren Mikrofluidkreisläufe, wobei die Vorrichtung enthält:
einen Verteiler (2), der eine erste Einlassöffnung (3) und eine zweite Einlassöffnung (3) aufweist, wobei jede Einlassöffnung ausgelegt ist, eine Fluidübertragung von der Einlassöffnung zu einem jeweiligen Ringkanal (4, 5, 6, 34) bereitzustellen;
wobei die Mikrofluidkreisläufe ausgelegt sind, von der Vorrichtung (1) mehrere Fluidströme zu empfangen, um mehrere Fluidströme mit im Wesentlichen gleichmäßigen Durchflussgeschwindigkeiten zu erzeugen, und geeignet sind zum Verteilen von Fluiden an die mehreren Mikrofluidkreisläufe; und
(ii) ein Verteilelement (7), das darin eine erste Gruppe von Öffnungen (12, 13, 14) und eine zweite Gruppe von Öffnungen (12, 13, 14) aufweist, wobei jede Gruppe von Öffnungen mindestens eine Öffnung (12a-j, 13a-j, 14a-j) hat, die ausgelegt ist, sich mit einem der Kanäle in Fluidverbindung zu befinden, derart, dass ermöglicht wird, dass ein Fluid zum Abgeben eines Fluidstroms an einen Mikrofluidkreislauf aus dem Kanal durch eine Öffnung zu einem jeweiligen Fluidauslass strömt.

2. Mikroreaktor nach Anspruch 1, wobei die mehreren Mikrofluidkreisläufe durch eine Teilströmevorrichtung zum Erzeugen von zwei oder mehreren Flüssigkeitsteilströmen gebildet werden.

3. Mikroreaktor nach Anspruch 1 oder Anspruch 2, wobei jeder der Ringkanäle einen Durchmesser im Bereich von 50 mm bis 300 mm, eine mittlere Breite im Bereich von 1 mm bis 5 mm und eine mittlere Tiefe im Bereich von 1 mm bis 5 mm aufweist.

4. Mikroreaktor nach einem der vorhergehenden Ansprüche, wobei der Durchmesser jeder Öffnung im Bereich von 0,1 mm bis 3 mm liegt.

5. Mikroreaktor nach einem der vorhergehenden Ansprüche, der ferner einen Durchflussbegrenzer (25a-f) enthält, der ausgelegt ist, das Fluid durch den Verteiler mit einem vorgegebenen Druck aufrechtzuerhalten und/oder die Strömung auszugleichen, während sie in die Auslässe eintritt.

6. Mikroreaktor nach Anspruch 5, wobei der Durchflussbegrenzer in einem Verteilkanal im Verteilelement derart angeordnet ist, dass das Fluid im Betrieb aus einer Öffnung im Kanal durch das Begrenzungsmittel zu einem jeweiligen Fluidauslass strömt.

7. Mikroreaktor nach Anspruch 6, wobei der Durchflussbegrenzer die innere Form oder Konfiguration des Verteilkanals enthält.

8. Mikroreaktor nach Anspruch 6, wobei der Durchflussbegrenzer eine Rohr- oder Schlauchlänge aufweist, die im Verteilkanal angeordnet ist.

9. Mikroreaktor nach einem der vorhergehenden Ansprüche, wobei jede Gruppe von Öffnungen zwei oder mehr Öffnungen enthält.

10. Mikroreaktor nach einem der vorhergehenden Ansprüche, wobei einer oder mehrere der jeweiligen Kanäle fortlaufend sind.

11. Mikroreaktor nach einem der Ansprüche 1 bis 9, wobei mindestens eine der Gruppen von Öffnungen zwei oder mehr Öffnungen umfasst und der jeweilige Kanal (34) mit einer Lücke (35) zwischen zwei benachbarten Öffnungen versehen ist.

12. Mikroreaktor nach Anspruch 11, wobei die Lücke eine Winkelabmessung von 45 Grad oder weniger aufweist.

13. Mikroreaktor nach einem der vorhergehenden Ansprüche, wobei die Querschnittsfläche mindestens eines der Kanäle in dem Bereich der jeweiligen Einlassöffnung größer als die Querschnittsfläche des Kanals in einem von der Einlassöffnung entfernten Bereich ist.

14. Mikroreaktor nach einem der vorhergehenden Ansprüche, wobei jede Öffnung ausgelegt ist zu ermöglichen, dass ein Fluid aus dem Kanal zum Fluidauslass strömt.

15. Mikroreaktor nach einem der vorhergehenden Ansprüche, wobei jede Gruppe von Öffnungen mehrere Öffnungen enthält, wobei jede Öffnung eine Fluidverbindung zwischen dem Kanal und einem jeweiligen Fluidauslass bereitstellt.

16. Mikroreaktor nach einem der vorhergehenden Ansprüche, wobei das Verhältnis der Querschnittsfläche des Kanals zur Querschnittsfläche der Öffnungen größer als 5:1 ist.

17. Mikroreaktor nach einem der vorhergehenden Ansprüche, der einen Kanal und eine Gruppe von Öffnungen für jede Fluideinlassöffnung enthält.

18. Mikroreaktor nach einem der vorhergehenden Ansprüche, wobei der Verteiler mindestens eine weitere Einlassöffnung enthält, wobei jede weitere Einlassöffnung ausgelegt ist, eine Fluidübertragung von der Einlassöffnung zu einem jeweiligen Kanal bereitzustellen.

19. Mikroreaktor nach einem der vorhergehenden Ansprüche, wobei jeder Kanal als konzentrische Konfigurationen ausgelegt ist und die Öffnungen in jeder Gruppe von Öffnungen ebenfalls als konzentrische Konfigurationen ausgelegt sind.

## Revendications

1. Microréacteur comprenant de multiples circuits microfluidiques,
**caractérisé en ce que**
le microréacteur comprend :
(i) un dispositif (1) pour produire de multiples écoulements de fluide à des débits sensiblement uniformes et approprié pour distribuer des fluides aux multiples circuits microfluidiques, lequel dispositif comprend :
un collecteur (2) comportant un premier orifice d'entrée (3) et un deuxième orifice d'entrée (3), chaque orifice d'entrée étant agencé pour effectuer un transfert de fluide de l'orifice d'entrée à un canal annulaire (4, 5, 6, 34) respectif ;
les circuits microfluidiques étant agencés pour recevoir de multiples écoulements de fluide du dispositif (1) pour produire de multiples écoulements de fluide à des débits sensiblement uniformes et appropriés pour distribuer des fluides aux multiples circuits microfluidiques ; et
(ii) un élément de distribution (7) comportant un premier ensemble d'ouvertures (12, 13, 14) et un deuxième ensemble d'ouvertures (12, 13, 14) dans celui-ci, chaque ensemble d'ouvertures comprenant au moins une ouverture (12a-j, 13a-j, 14a-j) et étant agencé pour être en communication fluidique avec l'un des canaux de sorte qu'un fluide puisse s'écouler du canal à travers une ouverture jusqu'à une sortie de fluide respective pour la distribution d'un l'écoulement de fluide à un circuit microfluidique.

2. Microréacteur selon la revendication 1, dans lequel les multiples circuits microfluidiques sont réalisés par un dispositif d'écoulement segmenté pour produire deux écoulements de liquide segmentés ou plus.

3. Microréacteur selon la revendication 1 ou la revendication 2, dans lequel chacun des canaux annulaires a un diamètre de 50 mm à 300 mm, une largeur moyenne de 1 mm à 5 mm et une profondeur moyenne de 1 mm à 5 mm.

4. Microréacteur selon l'une quelconque des revendications précédentes, dans lequel le diamètre de chaque ouverture est de 0,1 mm à 3 mm.

5. Microréacteur selon l'une quelconque des revendications précédentes comprenant en outre un réducteur de débit (25a-f) agencé pour maintenir le fluide à travers le collecteur à une pression prédéterminée et/ou équilibrer l'écoulement alors qu'il entre dans les sorties.

6. Microréacteur selon la revendication 5, dans lequel le réducteur de débit est agencé dans un passage de distribution dans l'élément de distribution de sorte que, en utilisation, le fluide s'écoule d'une ouverture dans le canal, à travers les moyens de réduction, jusqu'à une sortie de fluide respective.

7. Microréacteur selon la revendication 6, dans lequel le réducteur de débit comprend la forme ou la configuration interne du passage de distribution.

8. Microréacteur selon la revendication 6, dans lequel le réducteur de débit comprend une longueur de tuyau ou de tuyauterie positionnée dans le passage de distribution.

9. Microréacteur selon l'une quelconque des revendications précédentes, dans lequel chaque ensemble d'ouvertures comprend deux ouvertures ou plus.

10. Microréacteur selon l'une quelconque des revendications précédentes, dans lequel un ou plusieurs des canaux respectifs sont continus.

11. Microréacteur selon l'une quelconque des revendications 1 à 9, dans lequel au moins l'un des ensembles d'ouvertures comprend deux ouvertures ou plus, et le canal (34) respectif est pourvu d'une interruption (35) entre deux ouvertures adjacentes.

12. Microréacteur selon la revendication 11, dans lequel l'interruption a une dimension angulaire de 45 degrés ou moins.

13. Microréacteur selon l'une quelconque des revendications précédentes, dans lequel la section transversale d'au moins l'un des canaux dans la région de l'orifice d'entrée respectif est supérieure à la section transversale dudit canal dans une région à distance de l'orifice d'entrée.

14. Microréacteur selon l'une quelconque des revendications précédentes, dans lequel chaque ouverture est agencée pour permettre l'écoulement d'un fluide du canal jusqu'à la sortie de fluide.

15. Microréacteur selon l'une quelconque des revendications précédentes, dans lequel chaque ensemble d'ouvertures comprend une pluralité d'ouvertures, chaque ouverture réalisant une communication fluidique entre le canal et une sortie de fluide respective.

16. Microréacteur selon l'une quelconque des revendications précédentes, dans lequel le rapport entre la section transversale du canal et la section transversale des ouvertures est supérieur à 5:1.

17. Microréacteur selon l'une quelconque des revendications précédentes comprenant un canal et un ensemble d'ouvertures pour chaque orifice d'entrée de fluide.

18. Microréacteur selon l'une quelconque des revendications précédentes, dans lequel le collecteur comprend au moins un orifice d'entrée supplémentaire, chaque orifice d'entrée supplémentaire étant agencé pour effectuer un transfert de fluide de l'orifice d'entrée à un canal respectif.

19. Microréacteur selon l'une quelconque des revendications précédentes, dans lequel chaque canal est agencé en tant que configurations concentriques, et les ouvertures dans chaque ensemble d'ouvertures sont également agencées en tant que configurations concentriques.
